# EUROPÄISCHE PATENTANMELDUNG

(11) **EP 1 329 749 A1**
(43) Veröffentlichungstag der Anmeldung: **23.07.2003**
(21) Anmeldenummer: 02360032.3
(22) Anmeldetag: 16.01.2002
(51) Int. Cl.: G02B 6/12

(54) **Integrierter optischer Richtkoppler mit sich verjüngenden Wellenleitern**

(71) Anmelder: ALCATEL, 75008 Paris (FR)
(72) Erfinder: Blume, Oliver, 70499 Stuttgart (DE)
(74) Vertreter: Rausch, Gabriele, Dr.

(57) **Zusammenfassung**

Die Bauweise von erfindungsgemäßen Richtkopplern mit Hilfe integrierter optischer Wellenleiter ermöglicht solche Richtkoppler sehr kompakt und relativ einfach serienmäßig zu produzieren. Hierbei weisen die integrierten optischen Wellenleiter im Koppelbereich einen kleineren Querschnitt als der Querschnitt außerhalb des Koppelbereichs auf. Somit ist es möglich den Abstand der Wellenleiterabschnitte im Koppelbereich eines erfindungsgemäßen Richtkopplers hinreichend weit von einander zu halten, damit die Bedingungen der Fehlertoleranzen im Herstellungsverfahren minimiert sind. Dies ist besonders von Vorteil, wenn die Differenz der Brechungsindizes zwischen dem Kern der integrierten optischen Wellenleiter und deren Umgebung sehr groß ist.

## Beschreibung

Die Erfindung bezieht sich auf einen Richtkoppler nach dem Oberbegriff des Anspruches 1 sowie einer optischen Komponente.

Die ständig ansteigende Nachfrage von Bandbreite motiviert die Telekommunikationsbetreiber deren phasenoptische Netzwerke schnell zu erweitern. Dementsprechend nehmen optische Schaltungen in Netzwerken, in der Signale vollständig optisch verarbeitet werden, an Bedeutung zu. Die Anwendung von optischen Schaltungen ermöglicht im optischen Bereich ein Netzwerk zu rekonfigurieren oder wiederherzustellen. Die gewählte Bauweise von solchen Schaltungen besteht aus integrierten planaren Wellenleitern, um den hierfür benötigten Platzbedarf so klein wie möglich zu halten, sodass mehrere von solchen Schaltungen relativ leicht zusammen verknüpft werden können. Damit lässt sich eine Schaltmatrix auf einer einzigen kompakten optischen Komponente aufbauen.

Ein wesentliches Element vieler solcher Schaltmatrixen ist der integrierte Richtkoppler. Hierbei werden mehrere Wellenleiter, meistens zwei, auf einem Substrat, zum Beispiel aus Silika, entsprechend strukturiert, dass sie einen Koppelbereich aufweisen. Dieser Koppelbereich besteht aus Wellenleiterabschnitten, die genügend nah beieinander verlaufen, um zu ermöglichen, dass optische Signale, die entlang eines optischen Wellenleiters geführt sind, am Koppelbereich ganz oder teilweise in den benachbarten optischen Wellenleiter überkoppelt werden .

Erste Richtkoppler wurden in nichtintegrierter Technik mit Hilfe von Fasern hergestellt. Zum Beispiel in DE 37 13 658 ist ein Bündel von optischen Fasern gezeigt, die im Koppelbereich zunächst eng zusammengefügt sind (zum Beispiel durch Verdrillen der Fasern). Anschließend werden sie in diesem Bereich bis zum Schmelzen erhitzt und auseinander gezogen. Durch diesen Ziehprozess werden die Faser im Koppelbereich dünner und die Kerne der Faser rücken dichter zusammen. Dabei verringern sich die Querschnittsflächen der einzelnen Fasern. Es wird von "taper" gesprochen. Doch hat sich gezeigt, dass die Produktion rein faseroptischer Schmelzkoppler äußert schwierig ist, besonders wenn es vollkommen reproduzierbar sein soll.

Dies erklärt unter anderem die Bemühung optische Richtkoppler mit Hilfe von integrierten Wellenleitern nachzumachen. In JP 030071119 ist ein typisches Beispiel von einem Richtkoppler dargestellt, der aus zwei auf einem Substrat integrierten optischen Wellenleitern besteht. Die optischen Wellenleiter verlaufen in diesem Fall ungefähr parallel, und weisen an den Ausgängen zwischen den zwei optischen Wellenleitern einen hinreichend großen Abstand auf, um einen Anschluss von optischen Komponenten problemlos zu gewährleisten. Der Richtkoppler weist typischerweise einen Koppelbereich auf, in dem die zwei optischen Wellenleiter hinreichend nah strukturiert sind, um eine Lichtausbreitung von einem Wellenleiter zu dem anderen Wellenleiter zu ermöglichen. Der Abstand der zwei optischen Wellenleiter im Koppelbereich ist hierfür um einen Vielfaches kleiner als der Abstand dieser zwei optischen Wellenleiter an deren Ausgängen. Dementsprechend sind die integrierten optischen Wellenleiter in einem Übergangsbereich zum Koppelbereich mit einer Krümmung versehen. Diese Krümmung hängt direkt davon ab, wie groß die Differenz zwischen dem Abstand der optischen Wellenleiter an deren Enden und dem Abstand im Koppelbereich ist. Zudem ist sie auch durch die hierfür zur Verfügung stehende Fläche der optischen Komponente bestimmt.

Solche Richtkoppler mit integrierten optischen Wellenleitern werden zum Beispiel in gängiger SiO₂/Si-Technologie hergestellt. Dabei wird auf einem Siliziumsubstrat eine Schicht ("buffer layer") von zum Beispiel 15µm aus SiO₂ durch Oxidation unter Hochdruckdampf gewachsen. Sie dient zur Isolierung des Siliziumsubstrats, das eine sehr hohe Brechzahl aufweist. Eine zweite Schicht ("core layer") aus gedoptem Glas, zum Beispiel mit Phosphor oder Germanium, wird mit Hilfe von Flammhydrolyse ("flame hydrolysis deposition" - FHD) oder von Plasmaablagerung ("plasma enhanced chemical wafer deposition" - PECFD) auf das Oxid aufgelegt. In dieser letzteren Schicht werden, zum Beispiel durch Trockenätzen, die optischen Wellenleiter entsprechend einstrukturiert. Danach werden sie mit einer Schicht in einer Dicke von mehreren µm aus Phosphor oder Bor gedoptem Glas überdeckt. Eine typische Breite von dem Querschnitt solcher einstrukturierten optischen Wellenleiter befindet sich im Bereich von 5 bis 10µm. Dabei ist die Differenz zwischen den Brechungsindex des integrierten optischen Wellenleiters und den Brechungsindex der Umgebung ungefähr 8x10⁻³. Um Licht führen zu können ist bekanntlich der Brechungsindex der integrierten optischen Wellenleiter der größte. Bei optischen Fasern ist diese Differenz üblicherweise nur halb so groß d.h. 4x10⁻³.

Eine Zunahme der Komplexität von integrierten optischen Komponente, die solche optische Richtkoppler enthalten, führt unweigerlich dazu, dass die Bemühung einer kompakten Bauweise immer wichtiger wird. Die gekrümmten Bereiche der Wellenleiter im Übergangsbereich zu einem Koppelbereich decken den Hauptanteil der Fläche von solchen integrierten optischen Komponenten. Dies ist eine direkte Folge der zu erfüllenden Bedingung von einem Abstand zwischen Fasereingängen oder -ausgängen von ungefähr 250µm. Entsprechend ist die Haupteinschränkung der Reduzierung der Fläche von integrierten optischen Schaltungen durch den Krümmungsradius der Wellenleiter im Übergangsbereich zum Koppelbereich von dem Richtkoppler definiert.

Die geringere Differenz der Brechungsindizes zwischen Kern (core) und Überzugsschicht (cladding) von zum Beispiel 4x10⁻³ bei üblichen optischen Fasern erlaubt einen Krümmungsradius von mindestens 10mm. Eine höhere Krümmung (kleinerer Krümmungsradius) würde zu höheren Verlusten der übertragenen optischen Signale durch Verbreiterung der optischen Strahlung in der Überzugsschicht führen. Dagegen ermöglicht eine höhere Differenz der Brechungsindizes, wie dies bei integrierten optischen Wellenleitern der Fall ist, den Krümmungsradius kleiner zu wählen. Dementsprechend können die Bereiche am Übergang zum Koppelbereich von Richtkopplern aus solchen integrierten optischen Wellenleitern kleiner definiert werden, als bei Richtkopplern aus optischen Fasern.

Andererseits führt eine höhere Differenz der Brechungsindizes zu einer stärkeren Führung der optischen Moden. Dies führt bekanntlich zu höheren Verlusten an den Enden der integrierten optischen Wellenleiter, die mit optischen Fasern zu koppeln sind. Deshalb werden hierfür die Enden der integrierten optischen Wellenleiter verjüngt strukturiert ("tapering"), um eine Erhöhung des Modenfeldes zu den jeweiligen optischen Fasern zu gewährleisten. Doch mit einer höheren Differenz der Brechungsindizes ist auch die Kopplung zwischen den zwei integrierten optischen Wellenleitern im Koppelbereich reduziert. Um dadurch den Koppelbereich nicht zu sehr zu vergrößern, muss der Abstand zwischen den zwei integrierten optischen Wellenleitern im Koppelbereich kleiner gewählt werden. Dies führt zu strengeren Bedingungen bei den Fertigungstoleranzen in der Herstellung von aus integrierten optischen Wellenleitern gebildeten Richtkopplern.

Der Erfindung liegt die Aufgabe zu Grunde, die Bauweise von Richtkopplern mit integrierten optischen Wellenleitern zu erleichtern, ohne Vorteile von Materialen mit hoher Differenz der Brechungsindizes wie oben erwähnt, zu verlieren.

Die Aufgabe wird erfindungsgemäß durch einen Richtkoppler und eine optische Komponente nach der Lehre jeweils des Anspruches 1 und 8 gelöst.

Die erfindungsgemäße Strukturierung von integrierten optischen Welleitern im Koppelbereich des Richtkopplers mit einem wesentlich kleineren Querschnitt als dem Querschnitt der jeweiligen optischen Wellenleiter außerhalb des Koppelbereichs ermöglicht die Kopplung erheblich zu erhöhen. Dadurch kann der Abstand der zwei optischen Wellenleiter im Koppelbereich hinreichend groß gewählt werden, trotz der hohen Differenz zwischen dem Brechungsindex des Kerns des optischen Wellenleiters und dem Brechungsindex des Materials in dem die Wellenleiter eingebettet sind. Dies vereinfacht deutlich die Strukturierung von Richtkopplern in integrierter Technik.

Der Modenfeldumwandler kann durch einen allmählich zum Koppelbereich hin gerichteten verjüngten Wellenleiterquerschnitt (Taper) realisiert werden. Aber auch andere Bauformen mit allmählicher Verbreiterung des Wellenleiters oder aus segmentierten Teilstücken verschiedener Breite könnte zur Modenfeldanpassung verwendet werden. Die vorteilhafte Verwendung von solchen Tapern im Koppelbereich von Richtkopplern ermöglicht die Kopplungsverluste deutlich zu verringern. Dies ermöglicht nicht zu strenge Bedingungen von Fertigungstoleranzen gewährleisten zu müssen, ohne dabei Einbußen in der Kopplung in Kauf nehmen zu müssen.

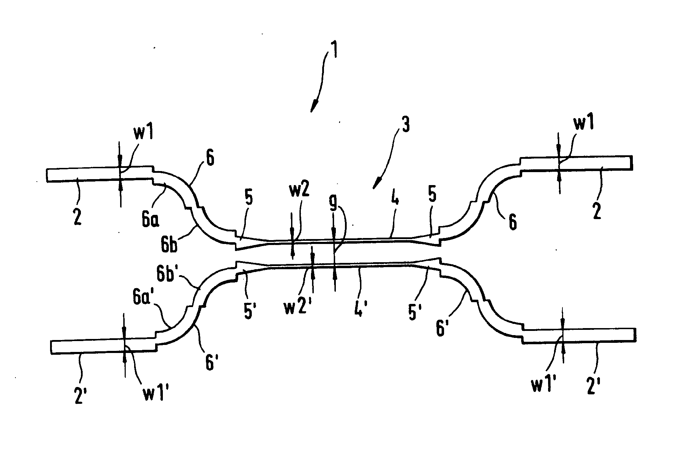

Vorteilhafte Ausgestaltungen der Erfindung ergeben sich aus den abhängigen Ansprüchen, der nachfolgenden Beschreibung und der Zeichnung.

Ein Ausführungsbeispiel der Erfindung wird nun unter Zuhilfenahme der beiliegenden Zeichnung weiter erläutert.

Es zeigen: Figur, eine schematische Aufsicht eines erfindungsgemäßen Richtkopplers.

Ein Beispiel eines erfindungsgemäßen Richtkopplers 1 ist auf der Figur schematisch gezeigt. In diesem Ausführungsbeispiel besteht der Richtkoppler 1 aus zwei auf einem Substrat integrierten optischen Wellenleitern 2, 2'. Diese optischen Wellenleiter 2, 2', sind an deren Enden mit genügenden Abstand voneinander in die optische Komponente strukturiert, um die Ankopplung von zum Beispiel optischen Fasern an den jeweiligen Enden der optischen Wellenleiter 2, 2' zu ermöglichen. Dieser Abstand kann typischerweise mindestens 250µm sein.

Der Richtkoppler 1 weist einen erfindungsgemäßen Koppelbereich 3 auf, der aus Wellenleiterabschnitten 4, 4' der integrierten optischen Wellenleiter 2, 2' gebildet ist, wobei diese Wellenleiterabschnitte 4, 4' nah beieinander verlaufen. Der Übergang von den Wellenleitern 2, 2' zum Koppelbereich 3 ist durch zueinander ausgerichtete Wellenleiterabschnitte 6, 6' gebildet. Diese zueinander ausgerichteten Wellenleiterabschnitte 6, 6' bestehen typischerweise aus je zwei Bogenstücken 6a, 6b, beziehungsweise 6a', 6b', die jeweils mit Versatz und umgekehrter Krümmung miteinander verbunden sind. Die Versatze sind entsprechend ausgewählt, um Verluste von den optischen Signalen zu minimieren.

Ein wesentliches Merkmal der Erfindung besteht darin, die Wellenleiterabschnitte 4, 4' im Koppelbereich 3 des Richtkopplers 1 mit einem Querschnitt w2, w2' zu strukturieren, der wesentlich kleiner ist, als der Querschnitt w1, w1' der jeweiligen Wellenleiterabschnitte 6, 6' außerhalb dieses Koppelbereiches 3. Der Faktor zwischen dem Querschnitt w2, w2' der Wellenleiterabschnitte 4, 4' im Koppelbereich 3 und dem Querschnitt w1, w1' der jeweiligen Wellenleiterabschnitte 6, 6' außerhalb des Koppelbereichs 3 kann bis zu 1/2 betragen. Dies hat direkt zur Folge, die Kopplung im Koppelbereich 3 des Richtkopplers 1 zu erhöhen. Dadurch kann der Abstand g zwischen den Wellenleiterabschnitten 4, 4' im Koppelbereich 3 relativ gesehen groß gehalten werden, so dass sich keine zu hohen Anforderungen bei den zugelassenen Fehlertoleranzen im Herstellungsverfahren von solchen Richtkopplern 1 stellen. Dieser Abstand g der parallel verlaufenden Wellenleiterabschnitte 4, 4' im Kopplerbereich 3 kann größer definiert sein, als der Querschnitt w2, w2' dieser Wellenleiterabschnitte 4, 4'. Der Abstand g kann bis zu einem Wert definiert werden, der ungefähr gleich ist wie der Querschnitt w1, w1' der Wellenleiter 2, 2' außerhalb des Koppelbereichs. Gegebenenfalls in Abhängigkeit der gewählten Materialeigenschaften und der gewünschten Kopplung kann der Abstand g noch größer sein.

Um Verluste bei der Übertragung von optischen Signalen durch solche erfindungsgemäßen Richtkoppler 1 so gering wie möglich zu halten, kann es vorteilhaft sein, wie in der Figur gezeigt, die jeweiligen Enden der Wellenleiterabschnitte 4, 4' am Übergang zum Koppelbereich mit einem zum Koppelbereich 3 hin gerichteten verjüngten Enden 5, 5' zu strukturieren, die als Modenfeldumwandler ("taper") dienen. Durch die schräge Linie an den jeweiligen Verjüngungen wird das Modenfeld der übertragenen optischen Signale allmählich vergrößert. Dies kann gegebenenfalls dazu helfen, die Verluste am Übergang des Wellenleiterquerschitts von w1 auf w2 bzw. von w1' auf w2' zu verringern. Die Länge der schrägen Linie muß vielfach größer sein als die Signalwellenlänge, um adiabatische Modenumwandlung zu erzielen. In Abhängigkeit der Verwendung von einem solchen Richtkoppler 1 ist es nicht unbedingt notwendig, alle Enden der jeweiligen Wellenleiterabschnitte 4, 4' mit einem Modenfeldumwandler 5, 5' zu versehen.

Typische Werte für die Querschnitte w1, w1 der Wellenleiter 2, 2' außerhalb des Koppelbereiches 3 und für die Querschnitte w2, w2' im Koppelbereich 3 können zwischen 4 bis 6µm beziehungsweise 2 bis 3µm betragen. In diesem Fall kann der Abstand g der Wellenleiterabschnitte 4, 4' im Koppelbereich 3 zwischen 2 bis 5µm sein. Diese Werte hängen natürlich direkt von den Eigenschaften der gewählten Materialien ab. Damit ist hauptsächlich die Differenz der Brechungsindizes zwischen dem Kern der Wellenleiter 2, 2' und deren Umgebung gemeint. Diese Differenz kann einen Wert von 8x10⁻³ bis über 1,2x10⁻² annehmen.

Die Herstellung von erfindungsgemäßen Richtkopplern wie oben dargestellt, vermeidet übliche Probleme, z.B. mit den Fertigungstoleranzen und bei der lithografischen Definition der Strukturen, die entstehen würden, wenn die Wellenleiterabschnitte im Koppelbereich zu nahe bei einander verlaufen würden. Mit der vorteilhaften Anwendung von Modenfeldumwandlern treten dabei nur geringe Zusatzverluste auf. Die Tatsache, dass mit Hilfe der Erfindung sehr kleine Koppelabstände vermieden werden können, gestattet es nun, herstellungstolerante Richtkoppler auch in Materialsystemen mit relativ hoher Brechungsindexdifferenz herzustellen. Die damit erzielbaren geringeren Krümmungsradien der Wellenleiterabschnitte 6 und 6', sowie in anderen Bereichen der optischen Komponente, erlauben eine höhere Zahl von solchen Richtkopplern oder anderer Komponenten zusammen auf eine optische Komponente zu integrieren. All dies kann vorteilhafterweise angewandt werden, um eine vergleichsweise kleine optische Komponente zu bilden, die mit mehreren von solchen erfindungsgemäßen Richtkopplern, zum Beispiel hintereinander geschaltet, oder mit einer Kombinationen von Richtkoppern mit anderen Komponenten bestückt ist.

## Patentansprüche

1. Richtkoppler (1) mit mindestens zwei auf einem Substrat integrierten optischen Wellenleitern (2, 2'), die zueinander ausgerichtete Wellenleiterabschnitte (6, 6') und einen aus zwei nahe bei einander verlaufenden Wellenleiterabschnitten (4, 4') gebildeten Koppelbereich (3) aufweisen, **dadurch gekennzeichnet, dass** die Wellenleiterabschnitte (4, 4') im Koppelbereich (3) mit einem Querschnitt (w2, w2') versehen sind, der kleiner als der Querschnitt (w1, w1') der jeweiligen Wellenleiterabschnitten (6, 6') außerhalb des Koppelbereichs (3) ist.

2. Richtkoppler (1) nach Anspruch 1, **dadurch gekennzeichnet, dass** der Faktor zwischen dem Querschnitt (w2, w2') der Wellenleiterabschnitte (4, 4') im Koppelbereich (3) und dem Querschnitt (w1, w1') der jeweiligen Wellenleiterabschnitte (6, 6') außerhalb des Koppelbereich (3) bis zu ½ beträgt.

3. Richtkoppler (1) nach Anspruch 1, **dadurch gekennzeichnet, dass** der Abstand (g) zwischen den zwei Wellenleiterabschnitten (4, 4') im Koppelbereich (3) einen Wert hat, der zwischen dem Querschnitt (w2, w2') der im Koppelbereich (3) verlaufenden Wellenleiterabschnitten (4, 4') und dem Querschnitt (w1, w1') der Wellenleiterabschnitten (6, 6') außerhalb des Koppelbereichs (3) definiert ist.

4. Richtkoppler (1) nach Anspruch 1, **dadurch gekennzeichnet, dass** der Abstand (g) zwischen den zwei Wellenleiterabschnitten (4, 4') im Koppelbereich (3) einen größeren Wert als den Querschnitt (w1 w1') der Wellenleiterabschnitten (6, 6') außerhalb des Koppelbereichs (3) hat.

5. Richtkoppler (1) nach Anspruch 1, **dadurch gekennzeichnet, dass** mindestens ein Wellenleiterabschnitt (4, 4') am Übergang zum Koppelbereich (3) mindestens einen Modenfeldumwandler aufweist.

6. Richtkoppler (1) nach Anspruch 1, **dadurch gekennzeichnet, dass** alle Enden (5, 5') der Wellenleiterabschnitte (4, 4') an den jeweiligen Übergängen zum Koppelbereich (3) mit Modenfeldumwandler versehen sind.

7. Richtkoppler nach Anspruch 5 oder 6, **dadurch gekennzeichnet, dass** zum Koppelbereich (3) hin gerichtetes verjüngtes Ende (5, 5') als Modenfeldumwandler dient.

8. Optische Komponente **dadurch gekennzeichnet, dass** sie mindestens einen Richtkoppler (1) nach Anspruch 1 aufweist.
